(19) Europäisches Patentamt

European Patent Office

Office européen des brevets

(11) **EP 4 787 192 A1**

(12) **EUROPEAN PATENT APPLICATION**
published in accordance with Art. 153(4) EPC

(43) Date of publication:
**05.08.2026 Bulletin 2026/32**

(21) Application number: **24870753.1**

(22) Date of filing: **25.09.2024**

(51) International Patent Classification (IPC):
***G06F 16/9535*** (2019.01)

(52) Cooperative Patent Classification (CPC):
**G06F 16/9535; G06F 16/9537; G06N 3/0464;
G06N 3/048; G06N 3/084; G06N 3/09; G06N 3/098;
G06Q 30/0601**

(86) International application number:
**PCT/CN2024/120992**

(87) International publication number:
**WO 2025/067209 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023 CN 202311294666**

(71) Applicants:
• **HUAWEI TECHNOLOGIES CO., LTD.
Shenzhen 518129 (CN)**
• **Renmin University of China
Beijing 100872 (CN)**

(72) Inventors:
• **CAI, Guohao
Shenzhen, Guangdong 518129 (CN)**
• **ZHAO, Haiyuan
Shenzhen, Guangdong 518129 (CN)**
• **ZHU, Jieming
Shenzhen, Guangdong 518129 (CN)**
• **DONG, Zhenhua
Shenzhen, Guangdong 518129 (CN)**
• **XU, Jun
Beijing 100872 (CN)**

(74) Representative: **Thun, Clemens
Mitscherlich PartmbB
Karlstraße 7
80333 München (DE)**

(54) **DATA PROCESSING METHOD AND RELATED DEVICE**

(57)    A data processing method is provided, and may be applied to the artificial intelligence field. The method includes: obtaining attribute information of a user and attribute information of an item; obtaining preference information of the user for the item based on the attribute information; determining predicted interaction duration of the user for the item based on the preference information and a cost variable by using a preset first mapping relationship, where the cost variable is information that affects interaction duration of the user for the item; and recommending the item to the user when the predicted interaction duration meets a preset condition. In this application, the interaction duration of the user for the item is predicted by using a cost variable-based conversion function of the interaction duration and the preference information, and the predicted interaction duration is used as a preference feature of the user for recommendation. This can obtain more accurate interaction duration. Further, a more accurate recommendation result is obtained.

FIG. 5

# EP 4 787 192 A1

## Description

This application claims priority to Chinese Patent Application No. 202311294666.8, filed with the China National Intellectual Property Administration on September 28, 2023 and entitled "DATA PROCESSING METHOD AND RELATED DEVICE", which is incorporated herein by reference in its entirety.

## TECHNICAL FIELD

This application relates to the artificial intelligence field, and in particular, to a data processing method and a related device.

## BACKGROUND

Artificial intelligence (artificial intelligence, AI) is a theory, a method, a technology, and an application system in which human intelligence is simulated and extended by using a digital computer or a machine controlled by a digital computer, to perceive an environment, obtain knowledge, and achieve an optimal result by using the knowledge. In other words, artificial intelligence is a branch of computer science, and attempts to understand essence of intelligence and produce a new intelligent machine that can react in a manner similar to human intelligence. Artificial intelligence is to study design principles and implementation methods of various intelligent machines, to enable the machines to have perception, inference, and decision-making functions.

The rise of video content platforms has attracted billions of users, and the video content platforms are used more frequently in people's daily life. Accurate and personalized video recommendation plays a crucial role in better meeting people's information requirements and enhancing their engagement. Different from traditional recommendation scenarios, video recommendation uses a streaming playback mode, that is, autoplay. This function makes widely used implicit feedback (for example, user clicks) no longer suitable as a metric for measuring user interests. Compared with clicks, watch time of the user indicates attention that the user pays to a video, and is considered as a better user interest indicator. However, that the user completes watching the video does not necessarily mean that the user likes the video. Even if the user completes watching the video, the user may still dislike the video. In addition, a proportion of completed videos is not low in a short video scenario. If these completed videos are used as positive samples to supervise training of a recommendation ranking model, a significant bias is caused. Additionally, based on a ratio trend of positive and negative feedback signals of the completed videos, a shorter completed video indicates higher explicit negative feedback of the user and lower explicit positive feedback of the user. This is because it takes time for the user to determine whether the user likes the video. An excessively short video is more likely to confuse a real interest of the user.

Therefore, a more accurate recommendation method is required.

## SUMMARY

According to a first aspect, this application provides a data processing method. The method includes: obtaining attribute information of a user and attribute information of an item; obtaining preference information of the user for the item based on the attribute information; determining predicted interaction duration of the user for the item based on the preference information and a cost variable by using a preset first mapping relationship, where the cost variable is information that affects interaction duration of the user for the item; and recommending the item to the user when the predicted interaction duration meets a preset condition.

In this embodiment of this application, the interaction duration of the user for the item is predicted by using a cost variable-based conversion function of the interaction duration and the preference information, and the predicted interaction duration is used as a preference feature of the user for recommendation. This can obtain more accurate interaction duration. Further, a more accurate recommendation result is obtained.

In a possible implementation, the method further includes: when the predicted interaction duration determined by using the preset first mapping relationship is greater than maximum interaction duration corresponding to the item, using the maximum interaction duration as clipped predicted interaction duration; and that the predicted interaction duration meets the preset condition includes: the clipped predicted interaction duration meets the preset condition.

In a possible implementation, the preference information is a score; and the preset first mapping relationship satisfies the following constraint: The output score is positively correlated with the predicted interaction duration.

In a possible implementation, the preference information is the score, and the preset first mapping relationship satisfies: When the preference information tends to be 0, the predicted interaction duration tends to be 0; or when the preference information tends to be 1, the predicted interaction duration tends to be infinite.

In a possible implementation, the preset first mapping relationship is specifically the following formula:

$$w_{u,v}^c = g(r_{u,v}; c) = \frac{1}{-c \log r_{u,v}} - 1,$$

where $w_{u,v}^c$ is the predicted interaction duration, c is the cost variable, and $r_{u,v}$ is the preference information.

In a possible implementation, the method further includes:
obtaining the cost variable based on the attribute information and/or context information by using a first neural network model.

In a possible implementation, the item is a video, and the interaction duration is watch time.

According to a second aspect, this application provides a data processing method. The method includes:

obtaining attribute information of a user and attribute information of an item;

obtaining first preference information of the user for the item based on the attribute information by using a second neural network model;

predicting second preference information of the user for the item based on actual interaction duration of the user for the item and a cost variable by using a preset second mapping relationship, where the cost variable is information that affects interaction duration of the user for the item; and

updating the second neural network model and the cost variable based on the first preference information and the second preference information.

An objective of this embodiment of this application is to accurately estimate the interaction duration of the user. Due to impact of a duration bias, estimation of a previous model is often inaccurate. This embodiment of this application proposes a concept of counterfactual interaction duration, to better explain existence of an item duration bias. In this embodiment of this application, a cost-based conversion function is designed, to convert the counterfactual interaction duration into an interest of the user for the item. Then, corresponding loss functions are respectively designed for complete interaction and non-complete interaction to supervise a training process of a recommendation model.

In a possible implementation, the method further includes:

obtaining the cost variable based on the attribute information and/or context information by using a first neural network model; and

updating the second neural network model and the cost variable based on the first preference information and the second preference information includes:

updating the second neural network model, the cost variable, and the first neural network model based on the first preference information and the second preference information.

In the foregoing manner, two models are designed, where a correlation model (that is, the second neural network model) is used to estimate a user interest in watching a current video, and a cost model (that is, the first neural network model) is used to estimate costs of the user. Joint learning is performed between the two models.

In a possible implementation, predicting the second preference information of the user for the item based on the actual interaction duration of the user for the item and the cost variable by using the preset second mapping relationship includes:

when the actual interaction duration is greater than maximum interaction duration corresponding to the item, predicting the second preference information of the user for the item based on the maximum interaction duration and the cost variable by using the preset second mapping relationship.

In a possible implementation, updating the neural network model based on the first preference information and the second preference information includes:

when the actual interaction duration is less than the maximum interaction duration corresponding to the item, constructing a first loss based on the first preference information and the second preference information, and updating the neural network model based on the first loss; or

when the actual interaction duration is greater than the maximum interaction duration corresponding to the item, constructing, based on the first preference information and the second preference information, a second loss different from the first loss, and updating the neural network model based on the second loss.

In a possible implementation, the first loss is an MSE loss, and the second loss is:

$$\sum_{w_{u,v}=d_v} \log \Phi \left[ \frac{f_\theta(x_{u,v}) - g'(d_v; c)}{\sigma} \right],$$

where

$\sigma$ is a standard deviation of the user interest.

In a possible implementation, the second mapping relationship is an inverse function of the first mapping relationship.

In a possible implementation, the preset second mapping relationship is specifically the following formula:

$$r_{u,v} = g^{-1}(w_{u,v}^c; c) = \exp\left(\frac{1}{-c(w_{u,v}^c + 1)}\right),$$

where

$w_{u,v}^c$ is the actual interaction duration, c is the cost variable, and $r_{u,v}$ is the preference information.

In a possible implementation, the item is a video, and the interaction duration is watch time.

According to a third aspect, this application provides a data processing apparatus. The apparatus includes:

an obtaining module, configured to obtain attribute information of a user and attribute information of an item; and
a processing module, configured to: obtain preference information of the user for the item based on the attribute information;
determine predicted interaction duration of the user for the item based on the preference information and a cost variable by using a preset first mapping relationship, where the cost variable is information that affects interaction duration of the user for the item; and
recommend the item to the user when the predicted interaction duration meets a preset condition.

In a possible implementation, the processing module is further configured to:

when the predicted interaction duration determined by using the preset first mapping relationship is greater than maximum interaction duration corresponding to the item, use the maximum interaction duration as clipped predicted interaction duration; and
that the predicted interaction duration meets the preset condition includes:
the clipped predicted interaction duration meets the preset condition.

In a possible implementation, the preference information is a score; and the preset first mapping relationship satisfies the following constraint: The output score is positively correlated with the predicted interaction duration.

In a possible implementation, the preference information is the score; and the preset first mapping relationship satisfies:

When the preference information tends to be 0, the predicted interaction duration tends to be 0; or when the preference information tends to be 1, the predicted interaction duration tends to be infinite.

In a possible implementation, the preset first mapping relationship is specifically the following formula:

$$w_{u,v}^c = g(r_{u,v}; c) = \frac{1}{-c \log r_{u,v}} - 1,$$

where $w_{u,v}^c$ is the predicted interaction duration, c is the cost variable, and $r_{u,v}$ is the preference information.

In a possible implementation, the processing module is further configured to:

obtain the cost variable based on the attribute information and/or context information by using a first neural network model.

In a possible implementation, the item is a video, and the interaction duration is watch time.

According to a fourth aspect, this application provides a data processing apparatus. The apparatus includes:

an obtaining module, configured to obtain attribute information of a user and attribute information of an item; and
a processing module, configured to: obtain first preference information of the user for the item based on the attribute information by using a second neural network model;

predict second preference information of the user for the item based on actual interaction duration of the user for the item and a cost variable by using a preset second mapping relationship, where the cost variable is information that affects interaction duration of the user for the item; and

update the second neural network model and the cost variable based on the first preference information and the second preference information.

In a possible implementation, the processing module is further configured to:

obtain the cost variable based on the attribute information and/or context information by using a first neural network model; and

the processing module is specifically configured to:

update the second neural network model, the cost variable, and the first neural network model based on the first preference information and the second preference information.

In a possible implementation, the processing module is specifically configured to:
when the actual interaction duration is greater than maximum interaction duration corresponding to the item, predict the second preference information of the user for the item based on the maximum interaction duration and the cost variable by using the preset second mapping relationship.

In a possible implementation, the processing module is specifically configured to:

when the actual interaction duration is less than the maximum interaction duration corresponding to the item, construct a first loss based on the first preference information and the second preference information, and update the neural network model based on the first loss; or

when the actual interaction duration is greater than the maximum interaction duration corresponding to the item, construct, based on the first preference information and the second preference information, a second loss different from the first loss, and update the neural network model based on the second loss.

In a possible implementation, the first loss is an MSE loss, and the second loss is:

$$\sum_{w_{u,v}=d_v} \log \Phi \left[ \frac{f_\theta(\mathbf{x}_{u,v}) - g'(d_v; c)}{\sigma} \right],$$

where
$\sigma$ is a standard deviation of a user interest.

In a possible implementation, the second mapping relationship is an inverse function of the first mapping relationship.

In a possible implementation, the preset second mapping relationship is specifically the following formula:

$$r_{u,v} = g^{-1}(w_{u,v}^c; c) = \exp\left(\frac{1}{-c(w_{u,v}^c + 1)}\right),$$

where $w_{u,v}^c$ is the actual interaction duration, c is the cost variable, and $r_{u,v}$ is the preference information.

In a possible implementation, the item is a video, and the interaction duration is watch time.

According to a fifth aspect, an embodiment of this application provides a data processing apparatus that may include a memory, a processor, and a bus system. The memory is configured to store a program, and the processor is configured to execute the program in the memory, to perform steps related to model inference in the method according to any one of the optional implementations of the first aspect.

According to a sixth aspect, an embodiment of this application provides a data processing apparatus that may include a memory, a processor, and a bus system. The memory is configured to store a program, and the processor is configured to execute the program in the memory, to perform steps related to model training in the method according to any one of the optional implementations of the second aspect.

According to a seventh aspect, an embodiment of this application provides a computer-readable storage medium. The computer-readable storage medium stores a computer program. When the computer program is run on a computer, the computer is enabled to perform the method according to any one of the first aspect and the optional implementations of the first aspect, or the method according to any one of the second aspect and the optional implementations of the second aspect.

According to an eighth aspect, an embodiment of this application provides a computer program. When the computer program is run on a computer, the computer is enabled to perform the method according to any one of the first aspect and the optional implementations of the first aspect, or the method according to any one of the second aspect and the optional implementations of the second aspect.

According to a ninth aspect, this application provides a chip system. The chip system includes a processor, configured to support a data processing apparatus to implement functions in the foregoing aspects, for example, send or process data or information in the foregoing methods. In a possible design, the chip system further includes a memory. The memory is configured to store program instructions and data that are necessary for an execution device or a training device. The chip system may include a chip, or may include a chip and another discrete component.

## BRIEF DESCRIPTION OF DRAWINGS

FIG. 1 is a diagram of a structure of an artificial intelligence main framework;
FIG. 2 is a diagram of a system architecture according to an embodiment of this application;
FIG. 3 is a diagram of a system architecture according to an embodiment of this application;
FIG. 4 is a diagram of a recommendation scenario according to an embodiment of this application;
FIG. 5 is a schematic flowchart of a data processing method according to an embodiment of this application;
FIG. 6A is a schematic flowchart of a data processing method according to an embodiment of this application;
FIG. 6B is a schematic flowchart of a data processing method according to an embodiment of this application;
FIG. 7 is a schematic flowchart of a data processing method according to an embodiment of this application;
FIG. 8 is a diagram of a structure of a data processing apparatus according to an embodiment of this application;
FIG. 9 is a diagram of a terminal device according to an embodiment of this application;
FIG. 10 is a diagram of a server according to an embodiment of this application; and
FIG. 11 is a diagram of a chip according to an embodiment of this application.

## DESCRIPTION OF EMBODIMENTS

The following describes embodiments of the present invention with reference to accompanying drawings in embodiments of the present invention. Terms used in implementations of the present invention are merely intended to describe specific embodiments of the present invention, but not to limit the present invention.

The following describes embodiments of this application with reference to the accompanying drawings. A person of ordinary skill in the art may learn that, with development of technologies and emergence of a new scenario, technical solutions provided in embodiments of this application are also applicable to a similar technical problem.

In the specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "has" and any other variants mean to cover the non-exclusive inclusion, so that a process, method, system, product, or device that includes a series of units is not necessarily limited to those units, but may include other units not expressly listed or inherent to such a process, method, product, or device.

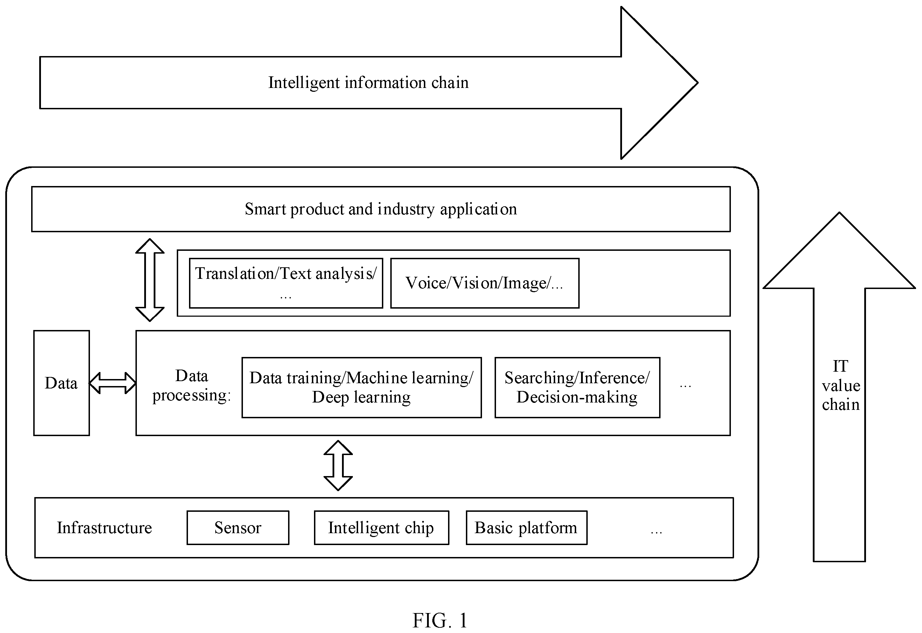

An overall working procedure of an artificial intelligence system is first described. FIG. 1 is a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. A sensor is used to communicate with the outside. A computing capability is provided by an intelligent chip (a hardware acceleration chip like a CPU, an NPU, a GPU, an ASIC, or an FPGA). The basic platform includes related platforms such as a distributed computing framework and a network for assurance and support, and may include cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the artificial intelligence field. The data relates to a graph, an image, a speech, and a text, further relates to internet of things data of a conventional device, and includes service data of an existing system and perception data such as force, displacement, a liquid level, a temperature, and humidity.

(3) Data processing

Data processing usually includes data training, machine learning, deep learning, searching, inference, decision-making, and the like.
Machine learning and deep learning may mean performing symbolic and formal intelligent information modeling, extraction, preprocessing, training, and the like on data.
Inference is a process in which human intelligent inference is simulated in a computer or an intelligent system, and machine thinking and problem resolving are performed by using formalized information according to an inference control policy. A typical function is searching and matching.
Decision-making is a process of making a decision after intelligent information is inferred, and usually provides functions such as classification, ranking, and prediction.

(4) General capability

After data processing mentioned above is performed on data, some general capabilities may further be formed based on a data processing result. For example, the general capability may be an algorithm or a general system, for example, translation, text analysis, computer vision processing, speech recognition, and image recognition.

(5) Smart product and industry application

The smart product and industry application are products and applications of the artificial intelligence system in various fields. The smart product and industry application involve packaging overall artificial intelligence solutions, to productize and apply intelligent information decision-making. Application fields of the smart product and industry application mainly include smart terminals, smart transportation, smart health care, autonomous driving, smart cities, and the like.
Embodiments of this application may be applied to the information recommendation field. The scenario includes but is not limited to scenarios related to e-commerce product recommendation, search engine result recommendation, application market recommendation, music recommendation, and video recommendation. A recommended item in various different application scenarios may also be referred to as an "object" for ease of subsequent description. To be specific, in different recommendation scenarios, the recommended object may be an app, a video, music, or a commodity (for example, a presentation interface of an online shopping platform presents different commodities based on different users, which may alternatively be presented based on a recommendation result of a recommendation model in essence). These recommendation scenarios usually involve collection of a user behavior log, log data preprocessing (for example, quantization and sampling), and sample set training to obtain a recommendation model, and analyze and process, based on the recommendation model, an object (for example, an app or music) in a scenario corresponding to a training sample item. For example, if a sample selected in a training process of the recommendation model is from operation behavior performed by a user of an application market in a mobile phone on a recommended app, a recommendation model obtained through training is applicable to the app application market in the mobile phone, or may be used in an app application market in another type of terminal to recommend an app in the terminal. The recommendation model finally computes recommendation probabilities or scores of to-be-recommended objects. A recommendation system selects recommendation results according to a specific selection rule. For example, the recommendation results are ranked based on the recommendation probabilities or the scores, and are presented to a user via a corresponding application or terminal device, and the user performs an operation on an object in the recommendation results to perform a process such as generating the user behavior log.

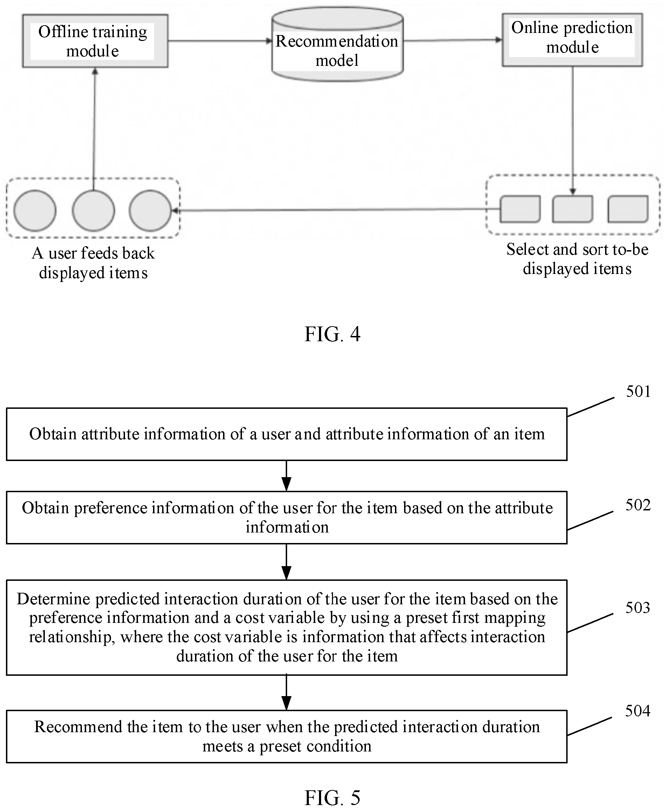

Refer to FIG. 4. In a recommendation process, when a user interacts with a recommendation system, a recommendation request is triggered. The recommendation system inputs the request and related feature information of the request into a deployed recommendation model, and then predicts click-through rates of the user for all candidate objects. Then, the candidate objects are ranked in descending order of the predicted click-through rates, and the candidate objects are sequentially displayed at different locations as recommendation results for the user. The user browses displayed items and performs user behavior, such as browsing, clicking, and downloading. The user behavior is stored in a log as training data. An offline training module irregularly updates a parameter of the recommendation model to improve recommendation effect of the model.

For example, when the user starts an application market in a mobile phone, a recommendation module of the application market may be triggered. The recommendation module of the application market predicts probabilities that the user downloads given candidate applications, based on a historical download record of the user, a clicking record of the user, features of the applications, and environment feature information such as time and a location. The application market displays the applications in descending order of the probabilities based on a prediction result, to increase download probabilities of the applications. Specifically, an application that is more likely to be downloaded is arranged in the front rank, and an application that is less likely to be downloaded is arranged in the rear rank. The user behavior is also stored in the log, and the offline training module trains and updates a parameter of a prediction model.

For another example, in an application related to a life-long companion, a cognitive brain may be constructed by simulating a mechanism of a human brain and based on historical data of the user in domains such as video, music, and news by using various models and algorithms, thereby establishing a life-long learning system framework for the user. The life-long companion may record a past event of the user based on system data, application data, and the like, understand a current intent of the user, predict a future action or future behavior of the user, and finally implement an intelligent service. At a current first stage, user behavioral data (including information such as an end-side SMS message, a photo, and an email event) is obtained from a music app, a video app, a browser app, and the like to construct a user profile system, and to construct an individual knowledge graph of the user based on a learning and memory module for user information filtering, association analysis, cross-domain recommendation, causal inference, and the like.

The following describes an application architecture in embodiments of this application.

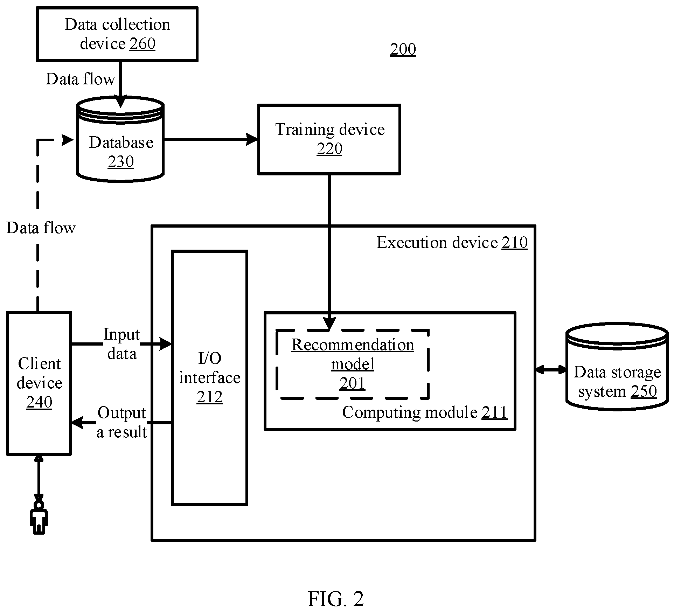

Refer to FIG. 2. An embodiment of the present invention provides a recommendation system architecture 200. A data collection device 260 is configured to collect a sample. One training sample may include a plurality of pieces of feature information (or described as attribute information, for example, a user attribute and an item attribute). There may be a plurality of types of feature information, which may specifically include user feature information, object feature information, and a label feature. The user feature information represents a feature of a user, for example, gender, age, occupation, or hobby. The object feature information represents a feature of an object pushed to the user. Different recommendation systems correspond to different objects, and types of features that need to be extracted for different objects are also different. For example, an object feature extracted from a training sample of an app market may be a name (an identifier), a type, a size, or the like of an app. An object feature extracted from a training sample of an e-commerce app may be a name, a category, a price range, or the like of a commodity. The label feature indicates whether the sample is a positive sample or a negative sample. Usually a label feature of a sample may be obtained based on information about an operation performed by the user on a recommended object. A sample in which the user performs an operation on a recommended object is a positive sample, and a sample in which the user does not perform an operation on a recommended object or just browses the recommended object is a negative sample. For example, when the user clicks, downloads, or purchases the recommended object, the label feature is 1, indicating that the sample is a positive sample; or if the user does not perform any operation on the recommended object, the label feature is 0, indicating that the sample is a negative sample. The sample may be stored in a database 230 after being collected. A part or all of feature information in the sample in the database 230 may be directly obtained from a client device 240, for example, the user feature information, information (used to determine a type identifier) about an operation performed by the user on an object, and the object feature information (for example, an object identifier). A training device 220 obtains a model parameter matrix through training based on the sample in the database 230, to generate a recommendation model 201 (for example, a feature extraction network and a neural network in embodiments of this application). The following describes in more detail how the training device 220 performs training to obtain the model parameter matrix for generating the recommendation model 201. The recommendation model 201 can be used to evaluate a large quantity of objects to obtain a score of each to-be-recommended object, to further recommend a specified quantity of objects or a preset quantity of objects from an evaluation result of the large quantity of objects. A computing module 211 obtains a recommendation result based on the evaluation result of the recommendation model 201, and recommends the recommendation result to the client device through an I/O interface 212.

In this embodiment of this application, the training device 220 may select positive and negative samples from a sample set in the database 230, add the positive and negative samples to a training set, and then perform training based on the samples in the training set by using the recommendation model, to obtain a trained recommendation model. For implementation details of the computing module 211, refer to detailed descriptions of a method embodiment shown in FIG.

5.

After performing training based on the sample to obtain the model parameter matrix that is used for constructing the recommendation model 201, the training device 220 sends the recommendation model 201 to an execution device 210, or directly sends the model parameter matrix to the execution device 210. The recommendation model is constructed in the execution device 210, for recommending a corresponding system. For example, a recommendation model obtained through training based on a video-related sample may be used in a video website or app to recommend a video to a user, and a recommendation model obtained through training based on an app-related sample may be used in an application market to recommend an app to a user.

The execution device 210 is provided with the I/O interface 212, to exchange data with an external device. The execution device 210 may obtain user feature information, for example, user identifier, user identity, gender, occupation, and hobby, from the client device 240 through the I/O interface 212. The information may alternatively be obtained from a system database. The recommendation model 201 recommends a target to-be-recommended object to the user based on the user feature information and feature information of a to-be-recommended object. The execution device 210 may be disposed in a cloud server, or may be disposed in a user client.

The execution device 210 may invoke data, code, and the like in a data storage system 250, and may store output data in the data storage system 250. The data storage system 250 may be disposed in the execution device 210, or may be independently disposed, or may be disposed in another network entity. There may be one or more data storage systems 250.

The computing module 211 processes the user feature information and the feature information of the to-be-recommended object by using the recommendation model 201. For example, the computing module 211 analyzes and processes the user feature information and the feature information of the to-be-recommended object by using the recommendation model 201, to obtain a score of the to-be-recommended object. The to-be-recommended object is ranked based on the score. An object in the front rank is used as an object recommended to the client device 240.

Finally, the I/O interface 212 returns the recommendation result to the client device 240, and presents the recommendation result to the user.

Furthermore, the training device 220 may generate corresponding recommendation models 201 for different targets based on different sample feature information, to provide a better result for the user.

It should be noted that FIG. 2 is merely a diagram of a system architecture provided in embodiments of the present invention. A position relationship between devices, components, modules, and the like shown in the figure does not constitute any limitation. For example, in FIG. 2, the data storage system 250 is an external memory relative to the execution device 210, and in another case, the data storage system 250 may alternatively be disposed in the execution device 210.

In this embodiment of this application, the training device 220, the execution device 210, and the client device 240 may be three different physical devices respectively, or the training device 220 and the execution device 210 may be on a same physical device or one cluster, or the execution device 210 and the client device 240 may be on a same physical device or one cluster.

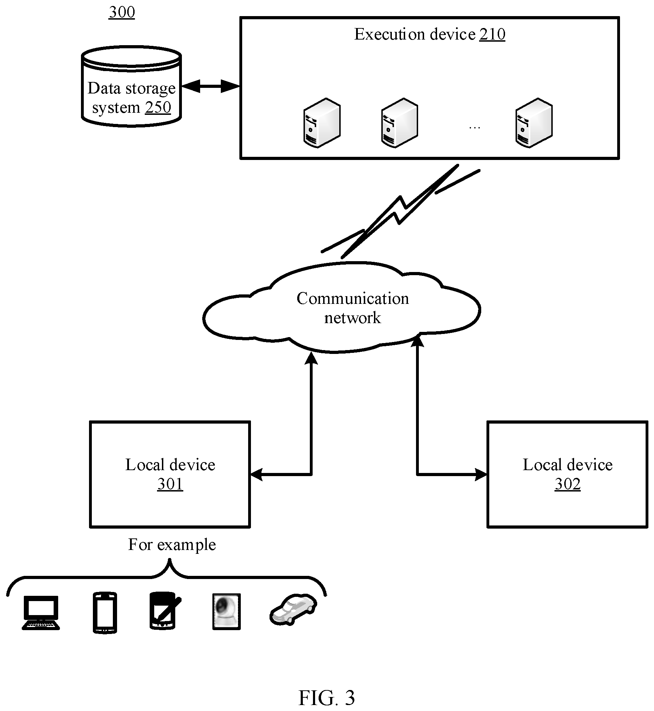

FIG. 3 shows a system architecture 300 according to an embodiment of the present invention. In this architecture, an execution device 210 is implemented by one or more servers. Optionally, the execution device 210 cooperates with another computing device, for example, a device such as a data storage device, a router, or a load balancer. The execution device 210 may be disposed on one physical site, or distributed on a plurality of physical sites. The execution device 210 may use data in a data storage system 250 or invoke program code in a data storage system 250 to implement an object recommendation function. Specifically, information about to-be-recommended objects is input into a recommendation model, and the recommendation model generates an estimated score for each to-be-recommended object, then ranks the to-be-recommended objects in descending order of the estimated scores, and recommends a to-be-recommended object to a user based on a ranking result. For example, top 10 objects in the ranking result are recommended to the user.

The data storage system 250 is configured to receive and store a parameter that is of the recommendation model and that is sent by a training device, is configured to store data of a recommendation result obtained by using the recommendation model, and certainly may further include program code (or instructions) needed for normal running of the storage system 250. The data storage system 250 may be one device deployed outside the execution device 210 or a distributed storage cluster including a plurality of devices deployed outside the execution device 210. In this case, when the execution device 210 needs to use the data in the storage system 250, the storage system 250 may send the data needed by the execution device to the execution device 210. Correspondingly, the execution device 210 receives and stores (or buffers) the data. Certainly, the data storage system 250 may alternatively be deployed in the execution device 210. When the data storage system 250 is deployed in the execution device 210, the distributed storage system may include one or more memories. Optionally, when there are a plurality of memories, different memories are configured to store different types of data. For example, a model parameter of the recommendation model generated by the training device and data of the recommendation result obtained by using the recommendation model may be stored in two different memories respectively.

Users may operate their user equipment (for example, a local device 301 and a local device 302) to interact with the execution device 210. Each local device may represent any computing device, for example, a personal computer, a computer workstation, a smartphone, a tablet computer, an intelligent camera, a smart automobile, another type of cellular phone, a media consumption device, a wearable device, a set-top box, or a game console.

A local device of each user may interact with the execution device 210 via a communication network of any communication mechanism/communication standard. The communication network may be a wide area network, a local area network, a point-to-point connection, or any combination thereof.

In another implementation, the execution device 210 may be implemented by the local device. For example, the local device 301 may implement a recommendation function of the execution device 210 based on a recommendation model by obtaining user feature information and feeding back a recommendation result to the user, or provide a service for a user of the local device 302.

Embodiments of this application relate to massive application of a neural network. Therefore, for ease of understanding, the following first describes related terms and related concepts such as the neural network in embodiments of this application.

1. Click-through rate (click-through rate, CTR)

The click-through rate may also be referred to as a click-through rate, and is a ratio of a quantity of times recommendation information (for example, a recommendation item) on a website or an application is clicked to a quantity of times of exposure of the recommendation information. The click-through rate is usually an important indicator for measuring a recommendation system in recommendation systems.

2. Personalized recommendation system

The personalized recommendation system is a system that analyzes historical data of a user (for example, operation information in embodiments of this application) by using a machine learning algorithm, and with this, predicts a new request and provides a personalized recommendation result.

3. Offline training (offline training)

The offline training is a module, in the personalized recommendation system, that iteratively updates a parameter of a recommendation model by using the machine learning algorithm based on the historical data of the user (for example, the operation information in embodiments of this application) until a specified requirement is met.

4. Online inference (online inference)

The online inference is to predict, by using a model obtained through offline training, a preference degree of the user for a recommended item in a current context environment based on features of the user, the item, and context, and predict a probability that the user selects the recommended item.

5. Click-through rate: The click-through rate refers to a probability that the user clicks a displayed item in a specific environment.

6. Conversion rate: The conversion rate refers to a probability that the user converts, in a specific environment, a displayed item that has been clicked, where conversion generally refers to behaviour such as downloading, installation, and registration.

7. Video duration (video duration): The video duration refers to a length of a video.

8. Watch time (watch time): The watch time is time that the user spends on a video.

9. Duration bias (duration bias): A longer length of a video indicates longer average watch time for the video in which the user is interested.

10. User interaction data (user interaction data): The user interaction data is behavioral data such as click and browse data generated when the user interacts with the recommendation system. Generally, the user interaction data is generated based on both a real preference of the user and another external factor. As a result, the user interaction data cannot completely reflect the real preference of the user.

For example, FIG. 4 is a diagram of a recommendation scenario according to an embodiment of this application. As shown in FIG. 4, when a user enters a system, a recommendation request is triggered. The recommendation system inputs the request and related information (for example, operation information in this embodiment of this application) of the request into a recommendation model, and then predicts a selection rate of the user for an item in the system. Further, items are ranked in descending order based on predicted selection rates or based on a function of the selection rates. That is, the recommendation system may sequentially display the items at different locations as a recommendation result for the user. The user browses the items at different locations, and performs user behavior such as browsing, selecting, and downloading. In addition, actual behavior of the user is stored in a log as training data. An offline training module continuously updates a parameter of the recommendation model to improve prediction effect of the model.

For example, when the user starts an application market in a smart terminal (for example, a mobile phone), a recommendation system in the application market may be triggered. The recommendation system in the application market predicts probabilities that the user downloads candidate recommended apps, based on a historical behavior log of the user, for example, a historical download record of the user, a user selection record, and a feature of the application market, for example, environment feature information such as time and a location. Based on a calculated result, the recommendation system of the application market may present the candidate apps in descending order of values of the predicted probabilities, to improve a download probability of the candidate app.

For example, an app with a high predicted user selection rate may be presented at a front recommendation location, and an app with a low predicted user selection rate may be presented in a back recommendation location.

The recommendation model may be a neural network model. The following describes related terms and concepts of a neural network that may be used in embodiments of this application.

(1) Neural network

The neural network may include a neuron. The neuron may be an operation unit that uses xs (namely, input data) and an intercept of 1 as an input. An output of the operation unit may be as follows:

$$h_{W,b}\left(x\right) = f\left(W^{T}x\right) = f(\sum\nolimits_{s=1}^{n} W_s x_s + b)$$

Herein, s=1, 2, ..., and n, n is a natural number greater than 1, Ws is a weight of xs, b is a bias of the neuron, and f is an activation function (activation function) of the neuron, and is used to introduce a non-linear characteristic into the neural network, to convert an input signal in the neuron into an output signal. The output signal of the activation function may serve as an input for a next convolutional layer, and the activation function may be a sigmoid function. The neural network is a network constituted by linking a plurality of single neurons together. To be specific, an output of a neuron may be an input of another neuron. An input of each neuron may be connected to a local receptive field of a previous layer to extract a feature of the local receptive field. The local receptive field may be a region including several neurons.

(2) Deep neural network

The deep neural network (Deep Neural Network, DNN), also referred to as a multilayer neural network, may be understood as a neural network having many hidden layers. The "many" herein does not have a special measurement standard. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer. Although the DNN seems complex, it is not complex in terms of work at each layer. Simply speaking, the DNN is the following linear relationship expression: $\vec{y} = \alpha(W\vec{x} + \vec{b})$, where $\vec{x}$ is an input vector, $\vec{y}$ is an output vector, b is an offset vector, W is a weight matrix (also referred to as a coefficient), and $\alpha$ () is an activation function. At each layer, such a simple operation is performed on the input vector $\vec{x}$, to obtain the output vector $\vec{y}$. Because the DNN has a large quantity of layers, a quantity of coefficients W and a quantity of offset vectors b are also large. Definitions of these parameters in the DNN are as follows: The coefficient W is used as an example. It is assumed that in a DNN having three layers, a linear coefficient from a $4^{th}$ neuron at the 2nd layer to a 2nd neuron at the 3rd layer is defined as $W_{24}^{3}$ . The superscript 3 represents a layer at which the coefficient W is located, and the subscript corresponds to an output third-layer index 2 and an input second-layer index 4. In conclusion, a coefficient from the $k^{th}$ neuron at the $(L-1)^{th}$ layer to the $j^{th}$ neuron at the $L^{th}$ layer is defined as $W_{jk}^{L}$ . It should be noted that there is no parameter W at the input layer. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of a trained deep neural network (a weight matrix formed by vectors W at many layers).

(3) Loss function

In a process of training the deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, the difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

(4) Back propagation algorithm

An error back propagation (back propagation, BP) algorithm may be used to correct a value of a parameter in an initial model in a training process, so that an error loss of the model becomes smaller. Specifically, an input signal is transferred forward until an error loss occurs at output, and the parameter in the initial model is updated based on back propagation error loss information, to make the error loss converge. The back propagation algorithm is an error-loss-centered back propagation motion intended to obtain a parameter, for example, a weight matrix, of an optimal model.

(5) Machine learning system

Parameters of a machine learning model are trained based on input data and labels by using an optimization method like gradient descent, and a model obtained through training is used to predict unknown data.

(6) Personalized recommendation system

The personalized recommendation system is a system that analyzes and models historical data of a user by using a machine learning algorithm, and with this, predicts a new user request and provides a personalized recommendation result.

The rise of video content platforms has attracted billions of users, and the video content platforms are used more frequently in people's daily life. Accurate and personalized video recommendation plays a crucial role in better meeting people's information requirements and enhancing their engagement. Different from traditional recommendation scenarios, video recommendation uses a streaming playback mode, that is, autoplay. This function makes widely used implicit feedback (for example, user clicks) no longer suitable as a metric for measuring user interests. Compared with clicks, watch time of the user indicates attention that the user pays to a video, and is considered as a better user interest indicator. However, that the user completes watching the video does not necessarily mean that the user likes the video. Even if the user completes watching the video, the user may still dislike the video. In addition, a proportion of completed videos is not low in a short video scenario. If these completed videos are used as positive samples to supervise training of a recommendation ranking model, a significant bias is caused. Additionally, based on a ratio trend of positive and negative feedback signals of the completed videos, a shorter completed video indicates higher explicit negative feedback of the user and lower explicit positive feedback of the user. This is because it takes time for the user to determine whether the user likes the video. An excessively short video is more likely to confuse a real interest of the user.

Therefore, a more accurate recommendation method is required.

A video recommendation problem may be described as follows: A user $u$ and a video with duration $d$ are given, and each user-video pair $(u, v)$ is described by an $n$-dimensional feature vector $x=\phi(u, v)\in Rn$. An interest of the user $u$ for the video $v$ may be represented by an unobserved variable $R$. $R\in\{0, 1\}$ is usually assumed to be a binary variable and sampled from latent Bernoulli distribution $Pr(R=1|x)$. Behavior of watching the video by the user may be recorded as log data $D = \{(xi, wi, di)\}_{i=1}^{N}$, where $xi$, $wi$, and $di$ respectively represent a feature vector of an $i^{th}$ user-video pair, watch time of the user on the video, and duration of the video. In an ideal case, we hope to obtain a scoring formula $f(x)$ by minimizing a loss function, that is, obtain the correlation $R$ of each user-video pair.

$$L_{ideal} = \frac{1}{D} \sum_{D} -rlog\big[\sigma(f(x))\big] - (1-r)log\big[1-\sigma(f(x))\big]$$

Herein, *r* is an unobserved true interest of the user for the video, and σ is a sigmoid function. r is an unobservable variable, and therefore the foregoing formula cannot be directly optimized. A naive method is to use a ratio of recorded watch time to actual duration, that is, a video playback completion rate (PCR), to replace actual correlation:

$$L_{naive} = \frac{1}{D} \sum_{D} -r\frac{w}{d} log\big[\sigma(f(x))\big] - (1-\frac{w}{d})log\big[1-\sigma(f(x))\big]$$

However, the watch time is affected by a duration bias and noise watching. A technical problem to be resolved by this patent is to uncover a real interest of the user for the video from latent counterfactual watch time, and correspond the real interest to the scoring function *f*(x) in the foregoing formula.

To resolve the foregoing problem, this application provides a data processing method.

FIG. 5 is a diagram of an embodiment of a data processing method according to an embodiment of this application. As shown in FIG. 5, the data processing method provided in this embodiment of this application includes the following steps.

501: Obtain attribute information of a user and attribute information of an item.

In a possible implementation, the embodiment corresponding to FIG. 5 is a model inference process in a process of performing recommendation to the user. Therefore, the attribute information of the user and the attribute information of the item may be obtained.

The attribute information of the user may be an attribute related to a preference feature of the user, and is at least one of gender, age, occupation, income, hobby, and education level. The gender may be male or female, the age may be a number ranging from 0 to 100, the occupation may be teacher, programmer, chef, or the like, the hobby may be basketball, tennis, running, or the like, and the education level may be primary school, middle school, high school, university, or the like. A specific type of the attribute information of the user is not limited in this application.

The item may be a physical item or a virtual item, for example, may be an item like an application (application, app), audio/video, a web page, and news. The attribute information of the item may be at least one of an item name, a developer, an installation package size, a category, and a degree of praise. For example, the item is an application. The category of the item may be a chat category, a running game, an office category, or the like, and the degree of praise may be a score and a comment made on the item, or the like. A specific type of the attribute information of the item is not limited in this application.

The item may be an object with which the user may interact for a long time, for example, a video, an audio, or text.

502: Obtain preference information of the user for the item based on the attribute information.

In a possible implementation, the attribute information may be processed by using a recommendation model (for example, a ranking model), to represent preference information that can represent a preference degree of the user for the item. For example, the preference information may be a score (for example, represented by a score from 0 to 1).

In addition, when the preference information of the user for the item is determined, context information (for example, location information and time information) of the user may be further referenced, in other words, the preference information of the user for the item may be obtained based on the attribute information and the context information.

Video recommendation is used as an example. A user feature, a video feature, and another environment feature may form a sample $x_{u, v}$, and the sample is scored by using the ranking model, to obtain $r_{u, v}$. A value range of $r_{u, v}$ is (0, 1), and $r_{u, v}$ represents a preference degree of a user u for a video v.

503: Determine predicted interaction duration of the user for the item based on the preference information and a cost variable by using a preset first mapping relationship, where the cost variable is information that affects interaction duration of the user for the item.

In a possible implementation, the item is a video, and the interaction duration is watch time.

A video is used as an example. When watching the video, the user may not like the video but still completes watching the video. A reason is not limited to that the video is excessively short, and the user is not given sufficient time to make a decision. In this embodiment of this application, a concept of counterfactual watch time is introduced, to represent latent watch time of the user for a video. For example, two users watch and complete a same video with 30s, where the first user feels that the video is just so-so after completing watching the video, and the second user feels that the video is engaging after completing watching the video and wants to continue watching the video. If the video is long enough, how long would the user spend watching it? The user has latent watch time for each video, and this duration is referred to as counterfactual watch time. Therefore, counterfactual watch time of an uncompleted video is log watch time of the video; and counterfactual watch time of a completed video is greater than or equal to log watch time of the video, and is unobservable. The counterfactual watch time corresponds to a preference degree of the user for the video.

In this embodiment of this application, counterfactual interaction duration of the user for the item may be used as a preference feature of the user for the item, and then recommendation is performed based on the feature.

To obtain the counterfactual interaction duration through prediction, in this embodiment of this application, a preset mapping relationship may be constructed. The mapping relationship may be used to map the preference information obtained in step 502 and the cost variable of the user into the predicted interaction duration (that is, the counterfactual interaction duration) of the user for the item.

The cost variable may be the information that affects the interaction duration of the user for the item. For example, the cost variable may be related to information such as an age group of the user and a region in which the user is located. In a possible implementation, different cost variables may be set for different users.

For example, the cost variable may be obtained based on the attribute information or the context information of the user by using a trained first neural network model.

For example, the item is the video. In this case, the counterfactual watch time depends on an interest of the user. It may be understood from an economic perspective that the user watching the video is a process that maximizes a benefit of the user. The user pays time costs while obtaining the gain by watching the video. In addition, the following three basic assumptions are made:

1. Marginal revenue: increases as correlation of the video increases and decreases as the watch time decreases.
2. Marginal cost: does not change with time.
3. Watching by the user is to obtain a maximum profit. When the marginal revenue is less than the marginal cost, the user stops watching the video.

Accumulated watching reward distribution and accumulated watching cost distribution are as follows:

$$F_{\text{reward}} = \omega(r_{u,v}) \cdot \log(w_{u,v}^{c} + 1);$$

$$F_{\text{cost}} = c \cdot w_{u,v}^{c},$$

Herein, $w(r_{u,v})$ is an initialized marginal revenue function. The two distribution functions are separately differentiated with respect to the counterfactual watch time. A value obtained when differentiated results are equal is latent counterfactual watch time.

$$\frac{\mathrm{d}\, F_{\text{reward}}}{\mathrm{d}\, w_{u,v}^{c}} = \frac{\mathrm{d}\, F_{\text{cost}}}{\mathrm{d}\, w_{u,v}^{c}} \Rightarrow w_{u,v}^{c} = \frac{\omega(r_{u,v})}{c} - 1.$$

In a possible implementation, the preference information is a score; and the preset first mapping relationship satisfies the following constraint: The output score is positively correlated with the predicted interaction duration.

The transform function g should meet the following property: When r tends to be 0, a marginal cost w also tends to be 0; or when r tends to be 1, the marginal cost tends to be infinite. Optionally, the transform function may be designed as $\omega(r_{u,v}) = 1/(-\log r_{u,v})$, that is:

$$w_{u,v}^{c} = g(r_{u,v}; c) = \frac{1}{-c \log r_{u,v}} - 1.$$

Therefore, an inverse function (that is, the first mapping relationship in this embodiment of this application) of the transform function may be:

$$r_{u,v} = g^{-1}(w_{u,v}^{c}; c) = \exp\left(\frac{1}{-c(w_{u,v}^{c} + 1)}\right).$$

In a possible implementation, the preference information is the score, and the preset first mapping relationship satisfies: When the preference information tends to be 0, the predicted interaction duration tends to be 0; or when the preference information tends to be 1, the predicted interaction duration tends to be infinite.

This embodiment of this application proposes a cost variable-based conversion function of watch time and correlation: A reasonable non-linear conversion function of watch time and correlation is designed, and the cost variable is added to adapt to data with different distributions.

In a possible implementation, when the predicted interaction duration determined by using the preset first mapping relationship is greater than maximum interaction duration corresponding to the item (the maximum interaction duration may be understood as longest interaction time in a case in which the user interacts with non-repeated content of the item, and for example, the item is the video, and the maximum interaction duration may be a length of the video), the predicted interaction duration may be clipped to the maximum interaction duration (in other words, the maximum interaction duration is used as clipped predicted interaction duration).

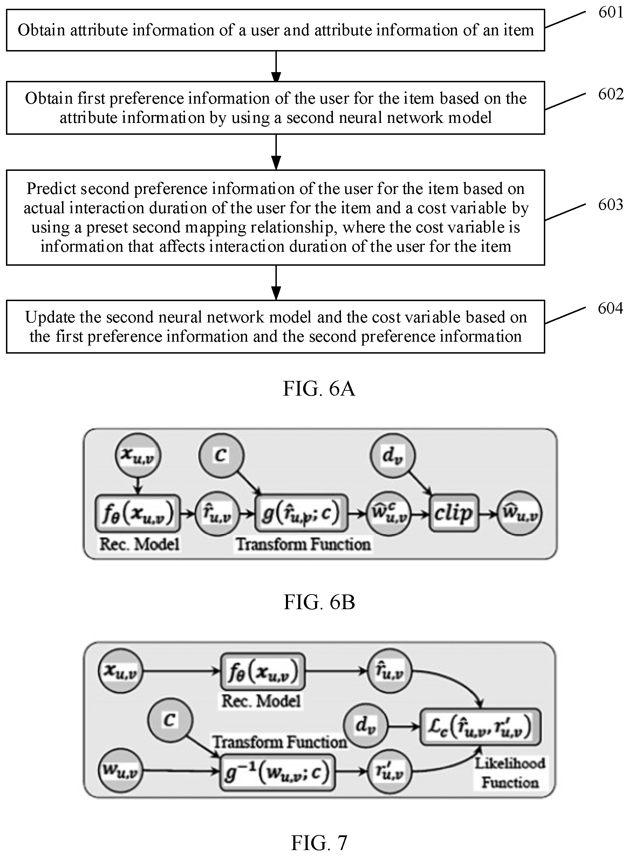

For example, the item is the video. An inference procedure may be shown in FIG. 6B. The user feature, the video feature, and the another environment feature form the sample $x_{u, v}$. The sample is scored by using the ranking model, to obtain $r_{u, v}$. The value range of $r_{u, v}$ is (0, 1), and $r_{u, v}$ represents the preference degree of the user u for the video v. Then, a score and the cost variable of the user are input to the transform function g, to obtain an estimated value $w_{u, v}$ of the counterfactual watch time of the user. Finally, the counterfactual watch time is clipped by using actual duration dv of the video. If the counterfactual duration is greater than the actual duration, the counterfactual watch time is clipped to the actual duration dv. Otherwise, no processing is performed.

504: Recommend the item to the user when the predicted interaction duration meets a preset condition.

In a possible implementation, in the model inference process, the predicted interaction duration may be used as a preference feature of the user for the item, to determine whether to recommend the item to the user.

During information recommendation, the item may be recommended to the user in a form of a list page, to expect the user to perform a behavioral action.

In this embodiment of this application, the interaction duration of the user for the item is predicted by using a cost variable-based conversion function of the interaction duration and the preference information, and the predicted interaction duration is used as a preference feature of the user for recommendation. This can obtain more accurate interaction duration. Further, a more accurate recommendation result is obtained.

FIG. 6A is a diagram of an embodiment of a data processing method according to an embodiment of this application. As shown in FIG. 6A, the data processing method provided in this embodiment of this application includes the following steps.

601: Obtain attribute information of a user and attribute information of an item.

The embodiment corresponding to FIG. 6A may be a model training process. For descriptions of step 601, refer to the descriptions of step 601 in the foregoing embodiment. Similarities are not described herein again.

602: Obtain first preference information of the user for the item based on the attribute information by using a second neural network model.

In a possible implementation, the attribute information may be processed by using the second neural network model (for example, a ranking model), to represent preference information that can represent a preference degree of the user for the item. For example, the preference information may be a score (for example, represented by a score from 0 to 1).

In addition, when the preference information of the user for the item is determined, context information (for example, location information and time information) of the user may be further referenced, in other words, the preference information of the user for the item may be obtained based on the attribute information and the context information.

603: Predict second preference information of the user for the item based on actual interaction duration of the user for the item and a cost variable by using a preset second mapping relationship, where the cost variable is information that affects interaction duration of the user for the item.

In a possible implementation, the item is a video, and the interaction duration is watch time.

The cost variable may be the information that affects the interaction duration of the user for the item. For example, the cost variable may be related to information such as an age group of the user and a region in which the user is located. In a possible implementation, different cost variables may be set for different users.

For example, the cost variable may be obtained based on the attribute information or the context information of the user by using a first neural network model.

The second mapping relationship may be an inverse function of the first mapping relationship described in the foregoing embodiment.

For example, in a possible implementation, the preset second mapping relationship may be specifically the following formula:

$$r_{u,v} = g^{-1}(w_{u,v}^c; c) = \exp\left(\frac{1}{-c(w_{u,v}^c + 1)}\right),$$

where $w_{u,v}^c$ is the actual interaction duration, c is the cost variable, and $r_{u,v}$ is preference information.

In a possible implementation, the actual interaction duration may be greater than maximum interaction duration corresponding to the item. In this case, the actual interaction duration may be clipped to the maximum interaction duration. To be specific, when the actual interaction duration is greater than the maximum interaction duration corresponding to the item, the second preference information of the user for the item may be predicted based on the maximum interaction duration and the cost variable by using the preset second mapping relationship.

604: Update the second neural network model and the cost variable based on the first preference information and the second preference information.

In a possible implementation, a loss may be constructed based on the first preference information and the second preference information, and the second neural network model and the cost variable are updated based on the loss.

In a possible implementation, if the first neural network model is used when the cost variable is obtained through calculation, the second neural network model, the cost variable, and the first neural network model may be updated based on the first preference information and the second preference information.

In the foregoing manner, two models are designed, where a correlation model (that is, the second neural network model) is used to estimate a user interest in watching a current video, and a cost model (that is, the first neural network model) is used to estimate costs of the user. Joint learning is performed between the two models.

In a possible implementation, a sample whose actual interaction duration is less than the maximum interaction duration corresponding to the item and a sample whose actual interaction duration is greater than the maximum interaction duration may be used to separately perform modeling.

For example, when the actual interaction duration is less than the maximum interaction duration corresponding to the item, a first loss may be constructed based on the first preference information and the second preference information, and the neural network model may be updated based on the first loss; or when the actual interaction duration is greater than the maximum interaction duration corresponding to the item, a second loss different from the first loss may be constructed based on the first preference information and the second preference information, and the neural network model may be updated based on the second loss.

In a possible implementation, the first loss is an MSE loss, and the second loss is:

$$\sum_{w_{u,v}=d_v} \log \Phi \left[ \frac{f_\theta(\mathbf{x}_{u,v}) - g'(d_v; c)}{\sigma} \right],$$

where

$\sigma$ is a standard deviation of a user interest.

For example, the loss may be constructed as the following formula:

$$\log(\mathcal{L}_c) = \sum_{w_{u,v}<d_v} \frac{-\left(g'(w_{u,v}; c) - f_\theta(\mathbf{x}_{u,v})\right)^2}{2\sigma^2}$$

$$+ \sum_{w_{u,v}=d_v} \log \Phi \left[ \frac{f_\theta(\mathbf{x}_{u,v}) - g'(d_v; c)}{\sigma} \right].$$

Herein, $\Phi$ is a standard Gaussian distribution; and $\sigma$ is the standard deviation of the user interest, and is a hyperparameter.

An embodiment of this application proposes a loss function used to alleviate a counterfactual interaction duration truncation problem: A correlation signal in counterfactual interaction duration clipped by maximum interaction duration is learned by using a loss function for distribution truncation.

For example, the item is the video. For a schematic flowchart of the model training process, refer to FIG. 7. A user feature, a video feature, and another environment feature form a sample $x_{u,v}$, and the sample is scored by using the ranking model. In addition, a score of the user interest is obtained based on the watch time of the user and the cost variable of the user by using an inverse function of a transform function g. The score of the user interest is used as a supervision signal. In addition, in consideration of different video lengths, predicted scores of the recommendation ranking model are supervised and trained according to a loss function Lc. A parameter of the ranking model is trained according to a deep learning method.

An objective of this embodiment of this application is to accurately estimate the interaction duration of the user. Due to impact of a duration bias, estimation of a previous model is often inaccurate. This embodiment of this application proposes a concept of the counterfactual interaction duration, to better explain existence of an item duration bias. In this embodiment of this application, a cost-based conversion function is designed, to convert the counterfactual interaction duration into an interest of the user for the item. Then, corresponding loss functions are respectively designed for complete interaction and non-complete interaction to supervise the training process of the recommendation model.

To verify a counterfactual interaction duration bias correction algorithm provided in embodiments of this application, experimental verification is performed on two public standard datasets and a Huawei product dataset and by using an example in which the item is the video. Effectiveness of the method is verified using two indicators: GAUC and nDCG. The method is compared with many baseline methods, including video watch time regression, video completion rate label (a ratio of watch time to duration), a WeChat WTG algorithm, an NDT algorithm, and a Kuaishou D2Q algorithm. For recommendation ranking models, an FM model and an AutoInt model are also used.

Table 1 summarizes recommendation performance of a CWM algorithm proposed in embodiments of this application and other baseline solutions in a short video scenario. It can be seen from the results that the CWM algorithm in embodiments of this application obtains optimal performance on all the datasets and all the ranking models, which is very important. The results also verify that assumption that all complete samples are considered as equal user interests in a previous method is not valid. Therefore, when the dataset includes many completion samples (that is, samples with clipped counterfactual watch time), the performance of these methods becomes worse. On the contrary, a CWM may be used to model the clipped counterfactual watch time of the user to better estimate the user interest and predict watch time of the user.

Table 1

| Backbone | Method | KuaiRand | | WeChat | | Product | |
|---|---|---|---|---|---|---|---|
| | | AUC | nDCG@3 | AUC | nDCG@3 | AUC | nDCG@3 |
| FM | VR | 0.687 | 0.459 | 0.658 | 0.578 | 0.605 | 0.556 |
| | PCR | 0.702 | 0.475 | 0.666 | 0.571 | 0.593 | 0.472 |
| | D2Q | 0.717 | 0.479 | 0.629 | 0.551 | 0.623 | 0.513 |
| | WTG | 0.712 | 0.477 | 0.611 | 0.542 | 0.624 | 0.523 |
| | NDT | 0.682 | 0.475 | 0.646 | 0.548 | 0.640 | 0.553 |
| | CWM | $0.750^{\dagger}$ | $0.495^{\dagger}$ | $0.718^{\dagger}$ | $0.624^{\dagger}$ | $0.660^{\dagger}$ | $0.582^{\dagger}$ |
| AutoInt | VR | 0.684 | 0.463 | 0.657 | 0.586 | 0.610 | 0.558 |
| | PCR | 0.701 | 0.475 | 0.661 | 0.568 | 0.593 | 0.479 |
| | D2Q | 0.718 | 0.479 | 0.628 | 0.553 | 0.629 | 0.514 |
| | WTG | 0.714 | 0.480 | 0.608 | 0.540 | 0.631 | 0.527 |
| | NDT | 0.684 | 0.474 | 0.650 | 0.565 | 0.644 | 0.559 |
| | CWM | $0.748^{\dagger}$ | $0.497^{\dagger}$ | $0.719^{\dagger}$ | $0.627^{\dagger}$ | $0.663^{\dagger}$ | $0.585^{\dagger}$ |

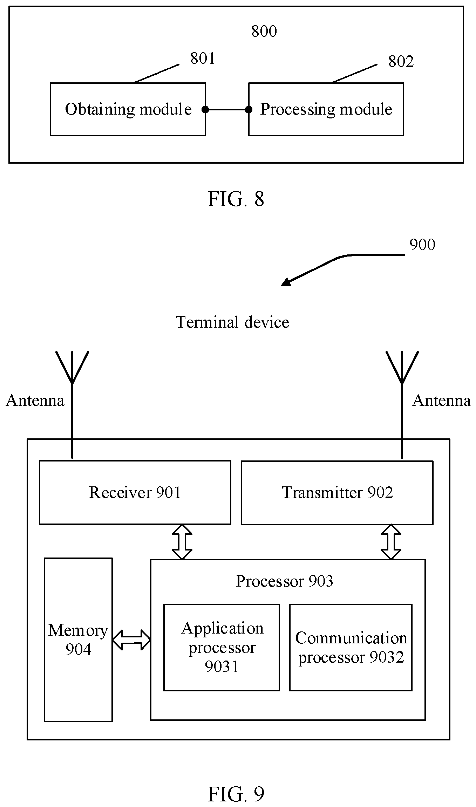

The following describes a data processing apparatus provided in embodiments of this application from a perspective of an apparatus. FIG. 8 is a diagram of a structure of a data processing apparatus according to an embodiment of this application. As shown in FIG. 8, the data processing apparatus 800 provided in this embodiment of this application includes:

an obtaining module 801, configured to obtain attribute information of a user and attribute information of an item, where
for specific descriptions of the obtaining module 801, refer to the descriptions of step 501 in the foregoing embodiment. Details are not described herein again; and
a processing module 802, configured to: obtain preference information of the user for the item based on the attribute information;
determine predicted interaction duration of the user for the item based on the preference information and a cost variable by using a preset first mapping relationship, where the cost variable is information that affects interaction duration of the user for the item; and
recommend the item to the user when the predicted interaction duration meets a preset condition, where
for specific descriptions of the processing module 802, refer to the descriptions of step 502 to step 504 in the foregoing embodiment. Details are not described herein again.

In a possible implementation, the processing module 802 is further configured to:

when the predicted interaction duration determined by using the preset first mapping relationship is greater than maximum interaction duration corresponding to the item, use the maximum interaction duration as clipped predicted interaction duration; and

that the predicted interaction duration meets the preset condition includes:

the clipped predicted interaction duration meets the preset condition.

In a possible implementation, the preference information is a score; and the preset first mapping relationship satisfies the following constraint: The output score is positively correlated with the predicted interaction duration.

In a possible implementation, the preference information is the score; and the preset first mapping relationship satisfies:

When the preference information tends to be 0, the predicted interaction duration tends to be 0; or when the preference information tends to be 1, the predicted interaction duration tends to be infinite.

In a possible implementation, the preset first mapping relationship is specifically the following formula:

$$w_{u,v}^{c} = g(r_{u,v}; c) = \frac{1}{-c \log r_{u,v}} - 1,$$

where $w_{u,v}^{c}$ is the predicted interaction duration, c is the cost variable, and $r_{u,v}$ is the preference information.

In a possible implementation, the processing module 802 is further configured to:

obtain the cost variable based on the attribute information and/or context information by using a first neural network model.

In a possible implementation, the item is a video, and the interaction duration is watch time.

In addition, an embodiment of this application further provides a data processing apparatus. The apparatus includes:

an obtaining module, configured to obtain attribute information of a user and attribute information of an item; and

a processing module, configured to: obtain first preference information of the user for the item based on the attribute information by using a second neural network model;

predict second preference information of the user for the item based on actual interaction duration of the user for the item and a cost variable by using a preset second mapping relationship, where the cost variable is information that affects interaction duration of the user for the item; and

update the second neural network model and the cost variable based on the first preference information and the second preference information.

In a possible implementation, the processing module is further configured to:

obtain the cost variable based on the attribute information and/or context information by using a first neural network model; and

the processing module is specifically configured to:

update the second neural network model, the cost variable, and the first neural network model based on the first preference information and the second preference information.

In a possible implementation, the processing module is specifically configured to:

when the actual interaction duration is greater than maximum interaction duration corresponding to the item, predict the second preference information of the user for the item based on the maximum interaction duration and the cost variable by using the preset second mapping relationship.

In a possible implementation, the processing module is specifically configured to:

when the actual interaction duration is less than the maximum interaction duration corresponding to the item, construct a first loss based on the first preference information and the second preference information, and update the neural network model based on the first loss; or

when the actual interaction duration is greater than the maximum interaction duration corresponding to the item, construct, based on the first preference information and the second preference information, a second loss different from the first loss, and update the neural network model based on the second loss.

In a possible implementation, the first loss is an MSE loss, and the second loss is:

$$\sum_{w_{u,v}=d_v} \log \Phi \left[ \frac{f_\theta(\mathrm{x}_{u,v}) - g'(d_v;c)}{\sigma} \right],$$

where

$\sigma$ is a standard deviation of a user interest.

In a possible implementation, the second mapping relationship is an inverse function of the first mapping relationship.

In a possible implementation, the preset second mapping relationship is specifically the following formula:

$$r_{u,v} = g^{-1}(w_{u,v}^c;c) = \exp\left(\frac{1}{-c(w_{u,v}^c + 1)}\right),$$

where $w_{u,v}^c$ is the actual interaction duration, c is the cost variable, and $r_{u,v}$ is the preference information.

In a possible implementation, the item is a video, and the interaction duration is watch time.

The following describes a terminal device provided in embodiments of this application. FIG. 9 is a diagram of a structure of a terminal device according to an embodiment of this application. The terminal device 900 may be specifically represented as a mobile phone, a tablet, a notebook computer, a smart wearable device, or the like. This is not limited herein. The terminal device 900 implements a function of the data processing method in the embodiment corresponding to FIG. 5. Specifically, the terminal device 900 includes a receiver 901, a transmitter 902, a processor 903, and a memory 904 (there may be one or more processors 903 in the terminal device 900). The processor 903 may include an application processor 9031 and a communication processor 9032. In some embodiments of this application, the receiver 901, the transmitter 902, the processor 903, and the memory 904 may be connected through a bus or in another manner.

The memory 904 may include a read-only memory and a random access memory, and provide instructions and data for the processor 903. A part of the memory 904 may further include a non-volatile random access memory (non-volatile random access memory, NVRAM). The memory 904 stores processor and operation instructions, an executable module, or a data structure, or a subset thereof, or an extended set thereof. The operation instructions may include various operation instructions for implementing various operations.

The processor 903 controls an operation of the terminal device. In specific application, the components of the terminal device are coupled together via a bus system. In addition to a data bus, the bus system may further include a power bus, a control bus, a status signal bus, and the like. However, for clear description, various types of buses in the figure are referred to as the bus system.

The methods disclosed in the foregoing embodiments of this application may be applied to the processor 903 or implemented by the processor 903. The processor 903 may be an integrated circuit chip and has a signal processing capability. In an implementation process, the steps in the foregoing methods may be completed by using a hardware integrated logic circuit in the processor 903 or by using instructions in a form of software. The processor 903 may be a general-purpose processor, a digital signal processor (digital signal processor, DSP), a microprocessor or microcontroller, a vision processing unit (vision processing unit, VPU), a tensor processing unit (tensor processing unit, TPU), and another processor suitable for AI computing, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 903 may implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory 904. The processor 903 reads information in the memory 904, and completes the steps in step 501 to step 504 in the foregoing embodiment in combination with hardware of the processor 903.

The receiver 901 may be configured to: receive input digital or character information, and generate a signal input related to a related setting and function control of the terminal device. The transmitter 902 may be configured to output digit or character information through a first interface. The transmitter 902 may be further configured to send instructions to a disk group through the first interface, to modify data in the disk group. The transmitter 902 may further include a display device, for example, a display.

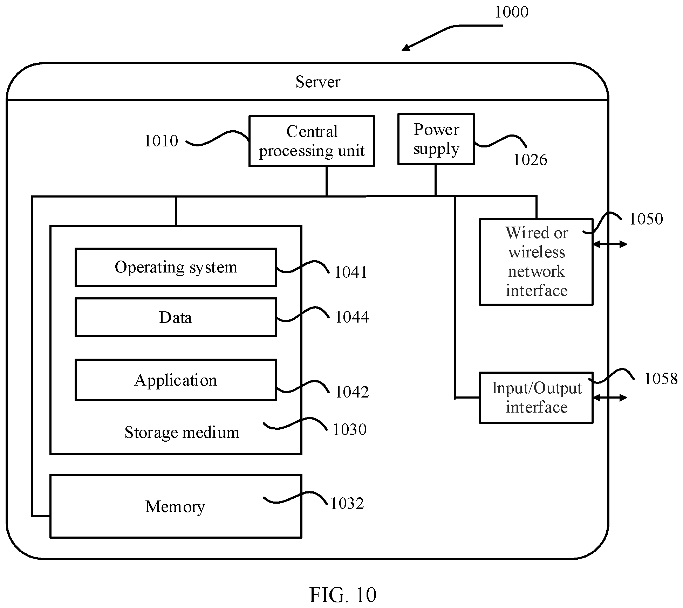

An embodiment of this application further provides a server. FIG. 10 is a diagram of a structure of a server according to an embodiment of this application. Specifically, the server 1000 is implemented by one or more servers. The server 1000 may vary greatly due to different configurations or performance, and may include one or more central processing units (central processing units, CPU) 1010 (for example, one or more processors), a memory 1032, and one or more storage media 1030 (for example, one or more mass storage devices) storing an application 1042 or data 1044. The memory 1032 and the storage medium 1030 may be transitory or persistent storage. A program stored in the storage medium 1030 may include one or more modules (not shown in the figure), and each module may include a series of instruction operations for the server. Further, the central processing unit 1010 may be configured to: communicate with the storage medium 1030, and perform, on the server 1000, the series of instruction operations in the storage medium 1030.

The server 1000 may further include one or more power supplies 1026, one or more wired or wireless network interfaces 1050, one or more input/output interfaces 1058, or one or more operating systems 1041, for example, Windows ServerTM, Mac OS XTM, UnixTM, LinuxTM, and FreeBSDTM.

Specifically, the server may perform steps in step 601 to step 604 in the foregoing embodiment.

An embodiment of this application further provides a computer program product. When the computer program product runs on a computer, the computer is enabled to perform the steps performed by the execution device, or the computer is enabled to perform the steps performed by the training device.

An embodiment of this application further provides a computer-readable storage medium. The computer-readable storage medium stores a program for signal processing. When the program is run on a computer, the computer is enabled to perform the steps performed by the execution device, or the computer is enabled to perform the steps performed by the training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in an execution device performs the data processing method described in the foregoing embodiment, or a chip in a training device performs the data processing method described in the foregoing embodiment. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

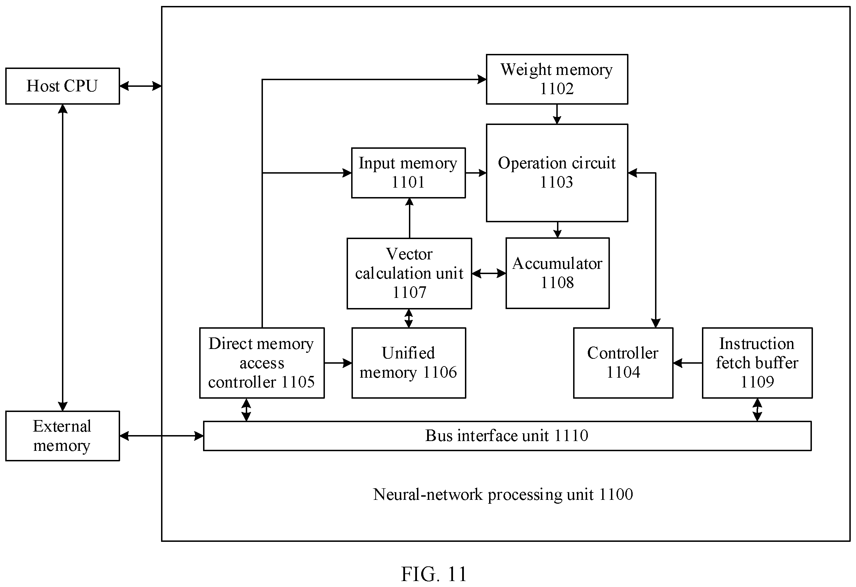

Specifically, FIG. 11 is a diagram of a structure of a chip according to an embodiment of this application. The chip may be represented as a neural-network processing unit NPU 1100. The NPU 1100 is mounted to a host CPU (Host CPU) as a coprocessor, and the host CPU assigns a task. A core part of the NPU is an operation circuit 1103. A controller 1104 controls the operation circuit 1103 to extract matrix data in a memory and perform a multiplication operation.

The NPU 1100 may implement, through cooperation between internal components, the data processing method provided in the embodiments described in FIG. 5 and FIG. 6A.

More specifically, in some implementations, the operation circuit 1103 in the NPU 1100 includes a plurality of process engines (Process Engine, PE). In some implementations, the operation circuit 1103 is a two-dimensional systolic array. The operation circuit 1103 may alternatively be a one-dimensional systolic array or another electronic circuit capable of performing mathematical operations such as multiplication and addition. In some implementations, the operation circuit 1103 is a general-purpose matrix processor.

For example, it is assumed that there is an input matrix A, a weight matrix B, and an output matrix C. The operation circuit fetches, from a weight memory 1102, data corresponding to the matrix B, and caches the data on each PE in the operation circuit. The operation circuit fetches data of the matrix A from an input memory 1101, to perform a matrix operation on the matrix B, and stores an obtained partial result or an obtained final result of the matrix in an accumulator (accumulator) 1108.

A unified memory 1106 is configured to store input data and output data. Weight data is directly transferred to the weight memory 1102 via a direct memory access controller (Direct Memory Access Controller, DMAC) 1105. Input data is also transferred to the unified memory 1106 via the DMAC.

A BIU is a bus interface unit, namely, a bus interface unit 1110, and is used for interaction between an AXI bus, and the DMAC and an instruction fetch buffer (Instruction Fetch Buffer, IFB) 1109.

The bus interface unit (Bus Interface Unit, BIU for short) 1110 is used for the instruction fetch buffer 1109 to obtain instructions from an external memory, and is further used for the direct memory access controller 1105 to obtain raw data of the input matrix A or the weight matrix B from the external memory.

The DMAC is mainly configured to transfer the input data in the external memory DDR to the unified memory 1106, transfer the weight data to the weight memory 1102, or transfer the input data to the input memory 1101.

A vector calculation unit 1107 includes a plurality of operation processing units, and if needed, performs further processing, for example, vector multiplication, vector addition, an exponential operation, a logarithmic operation, or magnitude comparison, on an output of the operation circuit 1103. The vector calculation unit 1107 is mainly used for network computing, for example, batch normalization (batch normalization), pixel-level summation, or upsampling on a feature plane, at a non-convolutional/fully connected layer of a neural network.

In some implementations, the vector calculation unit 1107 can store a processed output vector in the unified memory 1106. For example, the vector calculation unit 1107 may apply a linear function or a nonlinear function to the output of the operation circuit 1103, for example, perform linear interpolation on a feature plane extracted at a convolutional layer. For another example, the vector calculation unit 1107 may apply a linear function or a nonlinear function to a vector of an accumulated value, to generate an activation value. In some implementations, the vector calculation unit 1107 generates a normalized value, a pixel-level summation value, or both. In some implementations, the processed output vector can be used as an activated input to the operation circuit 1103, for example, the processed output vector can be used at a subsequent layer of the neural network.

The instruction fetch buffer (instruction fetch buffer) 1109 connected to the controller 1104 is configured to store instructions used by the controller 1104.

The unified memory 1106, the input memory 1101, the weight memory 1102, and the instruction fetch buffer 1109 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all of the modules may be selected based on actual needs to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on the computer, the procedures or functions according to embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by the computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

**Claims**

**1.** A data processing method, wherein the method comprises:

obtaining attribute information of a user and attribute information of an item;
obtaining preference information of the user for the item based on the attribute information;
determining predicted interaction duration of the user for the item based on the preference information and a cost variable by using a preset first mapping relationship, wherein the cost variable is information that affects interaction duration of the user for the item; and

recommending the item to the user when the predicted interaction duration meets a preset condition.

2. The method according to claim 1, wherein the method further comprises:

when the predicted interaction duration determined by using the preset first mapping relationship is greater than maximum interaction duration corresponding to the item, using the maximum interaction duration as clipped predicted interaction duration; and

that the predicted interaction duration meets the preset condition comprises:

the clipped predicted interaction duration meets the preset condition.

3. The method according to claim 1 or 2, wherein the preference information is a score; and the preset first mapping relationship satisfies the following constraint: the output score is positively correlated with the predicted interaction duration.

4. The method according to any one of claims 1 to 3, wherein the preference information is the score, and the preset first mapping relationship satisfies:

when the preference information tends to be 0, the predicted interaction duration tends to be 0; or when the preference information tends to be 1, the predicted interaction duration tends to be infinite.

5. The method according to any one of claims 1 to 4, wherein the preset first mapping relationship is specifically the following formula:

$$w_{u,v}^{c} = g(r_{u,v}; c) = \frac{1}{-c \log r_{u,v}} - 1,$$

wherein

$w_{u,v}^{c}$ is the predicted interaction duration, c is the cost variable, and $r_{u,v}$ is the preference information.

6. The method according to any one of claims 1 to 5, wherein the method further comprises:

obtaining the cost variable based on the attribute information and/or context information by using a first neural network model.

7. The method according to any one of claims 1 to 6, wherein the item is a video, and the interaction duration is watch time.

8. A data processing method, wherein the method comprises:

obtaining attribute information of a user and attribute information of an item;

obtaining first preference information of the user for the item based on the attribute information by using a second neural network model;

predicting second preference information of the user for the item based on actual interaction duration of the user for the item and a cost variable by using a preset second mapping relationship, wherein the cost variable is information that affects interaction duration of the user for the item; and

updating the second neural network model and the cost variable based on the first preference information and the second preference information.

9. The method according to claim 8, wherein the method further comprises:

obtaining the cost variable based on the attribute information and/or context information by using a first neural network model; and

updating the second neural network model and the cost variable based on the first preference information and the second preference information comprises:

updating the second neural network model, the cost variable, and the first neural network model based on the first preference information and the second preference information.

10. The method according to claim 8 or 9, wherein predicting the second preference information of the user for the item based on the actual interaction duration of the user for the item and the cost variable by using the preset second mapping relationship comprises:
when the actual interaction duration is greater than maximum interaction duration corresponding to the item, predicting the second preference information of the user for the item based on the maximum interaction duration and the cost variable by using the preset second mapping relationship.

11. The method according to any one of claims 8 to 10, wherein updating the neural network model based on the first preference information and the second preference information comprises:

when the actual interaction duration is less than the maximum interaction duration corresponding to the item, constructing a first loss based on the first preference information and the second preference information, and updating the neural network model based on the first loss; or
when the actual interaction duration is greater than the maximum interaction duration corresponding to the item, constructing, based on the first preference information and the second preference information, a second loss different from the first loss, and updating the neural network model based on the second loss.

12. The method according to claim 11, wherein the first loss is an MSE loss, and the second loss is:

$$\sum_{w_{u,v}=d_v} \log \Phi \left[ \frac{f_\theta(\mathbf{x}_{u,v}) - g'(d_v;c)}{\sigma} \right],$$

wherein
$\sigma$ is a standard deviation of a user interest.

13. The method according to any one of claims 8 to 12, wherein the second mapping relationship is an inverse function of a first mapping relationship.

14. The method according to any one of claims 8 to 13, wherein the preset second mapping relationship is specifically the following formula:

$$r_{u,v} = g^{-1}(w_{u,v}^c; c) = \exp\left( \frac{1}{-c(w_{u,v}^c + 1)} \right),$$

wherein
$w_{u,v}^c$ is the actual interaction duration, c is the cost variable, and $r_{u,v}$ is the preference information.

15. The method according to any one of claims 8 to 13, wherein the item is a video, and the interaction duration is watch time.

16. A data processing apparatus, wherein the apparatus comprises:

an obtaining module, configured to obtain attribute information of a user and attribute information of an item; and
a processing module, configured to: obtain preference information of the user for the item based on the attribute information;
determine predicted interaction duration of the user for the item based on the preference information and a cost variable by using a preset first mapping relationship, wherein the cost variable is information that affects interaction duration of the user for the item; and
recommend the item to the user when the predicted interaction duration meets a preset condition.

17. The apparatus according to claim 16, wherein the processing module is further configured to:

when the predicted interaction duration determined by using the preset first mapping relationship is greater than maximum interaction duration corresponding to the item, use the maximum interaction duration as clipped predicted interaction duration; and
that the predicted interaction duration meets the preset condition comprises:
the clipped predicted interaction duration meets the preset condition.

18. The apparatus according to claim 16 or 17, wherein the preference information is a score; and the preset first mapping relationship satisfies the following constraint: the output score is positively correlated with the predicted interaction duration.

19. The apparatus according to any one of claims 16 to 18, wherein the preference information is the score, and the preset first mapping relationship satisfies:
when the preference information tends to be 0, the predicted interaction duration tends to be 0; or when the preference information tends to be 1, the predicted interaction duration tends to be infinite.

20. The apparatus according to any one of claims 16 to 19, wherein the preset first mapping relationship is specifically the following formula:

$$w_{u,v}^c = g(r_{u,v}; c) = \frac{1}{-c \log r_{u,v}} - 1,$$

wherein

$w_{u,v}^c$ is the predicted interaction duration, c is the cost variable, and $r_{u,v}$ is the preference information.

21. The apparatus according to any one of claims 16 to 20, wherein the processing module is further configured to:
obtain the cost variable based on the attribute information and/or context information by using a first neural network model.

22. The apparatus according to any one of claims 16 to 21, wherein the item is a video, and the interaction duration is watch time.

23. A data processing apparatus, wherein the apparatus comprises:

an obtaining module, configured to obtain attribute information of a user and attribute information of an item; and
a processing module, configured to: obtain first preference information of the user for the item based on the attribute information by using a second neural network model;
predict second preference information of the user for the item based on actual interaction duration of the user for the item and a cost variable by using a preset second mapping relationship, wherein the cost variable is information that affects interaction duration of the user for the item; and
update the second neural network model and the cost variable based on the first preference information and the second preference information.

24. The apparatus according to claim 23, wherein the processing module is further configured to:

obtain the cost variable based on the attribute information and/or context information by using a first neural network model; and
the processing module is specifically configured to:
update the second neural network model, the cost variable, and the first neural network model based on the first preference information and the second preference information.

25. The apparatus according to claim 23 or 24, wherein the processing module is specifically configured to:
when the actual interaction duration is greater than maximum interaction duration corresponding to the item, predict the second preference information of the user for the item based on the maximum interaction duration and the cost variable by using the preset second mapping relationship.

26. The apparatus according to any one of claims 23 to 25, wherein the processing module is specifically configured to:

when the actual interaction duration is less than the maximum interaction duration corresponding to the item, construct a first loss based on the first preference information and the second preference information, and update the neural network model based on the first loss; or

when the actual interaction duration is greater than the maximum interaction duration corresponding to the item, construct, based on the first preference information and the second preference information, a second loss different from the first loss, and update the neural network model based on the second loss.

27. The apparatus according to claim 26, wherein the first loss is an MSE loss, and the second loss is:

$$\sum_{w_{u,v}=d_v} \log \Phi \left| \frac{f_\theta(x_{u,v}) - g'(d_v; c)}{\sigma} \right|,$$

wherein

$\sigma$ is a standard deviation of a user interest.

28. The apparatus according to any one of claims 23 to 27, wherein the second mapping relationship is an inverse function of a first mapping relationship.

29. The apparatus according to any one of claims 23 to 28, wherein the preset second mapping relationship is specifically the following formula:

$$r_{u,v} = g^{-1}(w_{u,v}^c; c) = \exp\left(\frac{1}{-c(w_{u,v}^c + 1)}\right),$$

wherein

$w_{u,v}^c$ is the actual interaction duration, c is the cost variable, and $r_{u,v}$ is the preference information.

30. The apparatus according to any one of claims 23 to 29, wherein the item is a video, and the interaction duration is watch time.

31. A data processing apparatus, wherein the apparatus comprises a memory and a processor, the memory stores code, and the processor is configured to obtain the code and perform the method according to any one of claims 1 to 15.

32. A computer storage medium, wherein the computer storage medium stores one or more instructions, and when the instructions are executed by one or more computers, the one or more computers are enabled to implement the method according to any one of claims 1 to 15.

33. A computer program product, wherein the computer program product comprises code, and when the code is executed, the computer program product is used to implement steps in the method according to any one of claims 1 to 15.

FIG. 1

EP 4 787 192 A1

FIG. 2

300

Data storage system 250

Execution device 210

Communication network

Local device 301

Local device 302

For example

FIG. 3

Offline training module

Recommendation model

Online prediction module

A user feeds back displayed items

Select and sort to-be displayed items

FIG. 4

Obtain attribute information of a user and attribute information of an item — 501

Obtain preference information of the user for the item based on the attribute information — 502

Determine predicted interaction duration of the user for the item based on the preference information and a cost variable by using a preset first mapping relationship, where the cost variable is information that affects interaction duration of the user for the item — 503

Recommend the item to the user when the predicted interaction duration meets a preset condition — 504

FIG. 5

| Obtain attribute information of a user and attribute information of an item | 601 |

↓

| Obtain first preference information of the user for the item based on the attribute information by using a second neural network model | 602 |

↓

| Predict second preference information of the user for the item based on actual interaction duration of the user for the item and a cost variable by using a preset second mapping relationship, where the cost variable is information that affects interaction duration of the user for the item | 603 |

↓

| Update the second neural network model and the cost variable based on the first preference information and the second preference information | 604 |

FIG. 6A

FIG. 6B

FIG. 7

800

801

Obtaining module

802

Processing module

FIG. 8

900

Terminal device

Antenna

Antenna

Receiver 901

Transmitter 902

Processor 903

Memory 904

Application processor 9031

Communication processor 9032

FIG. 9

1000

Server

1010 ⌇ | Central processing unit | | Power supply |

1026

| Operating system | ⌇ 1041 |

| Data | ⌇ 1044 |

| Application | ⌇ 1042 |

Storage medium ⌇ 1030

| Memory | ⌇ 1032 |

Wired or wireless network interface ⌇ 1050

Input/Output interface ⌇ 1058

FIG. 10

FIG. 11

## INTERNATIONAL SEARCH REPORT

| International application No. |
|---|
| **PCT/CN2024/120992** |

### A. CLASSIFICATION OF SUBJECT MATTER

G06F16/9535(2019.01)i

According to International Patent Classification (IPC) or to both national classification and IPC

### B. FIELDS SEARCHED

Minimum documentation searched (classification system followed by classification symbols)

IPC:G06F16/-

Documentation searched other than minimum documentation to the extent that such documents are included in the fields searched

Electronic data base consulted during the international search (name of data base and, where practicable, search terms used)

CJFD, CNABS, CNTXT, CNKI: 成本变量, 打分, 评分, 关注, 喜好, 兴趣, 迭代, 更新, 优化, 模型, 观看, 时长, 视频, 音乐, 音频, 推荐, 用户, 预测, 预估, 预计, 华为技术有限公司, 赵海源; DWPI, ENTXT, ENTXTC, USTXT, VEN, WPABS, WPABSC, IEEE: cost variate, grade, score, concern, preference, interest, iteration, update, optimize, model, watch, time, video, music, audio, recommendat+, user, forecast, estimate, predict, HUAWEI TECHNOLOGIES CO., LTD., Haiyuan Zhao.

### C. DOCUMENTS CONSIDERED TO BE RELEVANT

| Category* | Citation of document, with indication, where appropriate, of the relevant passages | Relevant to claim No. |
|---|---|---|
| PX | ZHAO, Haiyuan. ""Counteracting Duration Bias in Video Recommendation via Counterfactual Watch Time"" *KDD'24: Proceedings of the 30th ACM SIGKDD Conference on Knowledge Discovery and Data Mining*, 24 August 2024 (2024-08-24), 4455-4466 sections 2-4 | 1-33 |
| X | CN 112035740 A (GUANGZHOU BAIGUOYUAN INFORMATION TECHNOLOGY CO., LTD.) 04 December 2020 (2020-12-04) description, paragraphs [0040]-[0090] | 1-4, 6-7, 16-19, 21-22, 31-33 |
| A | CN 111125420 A (TENCENT TECHNOLOGY (SHENZHEN) CO., LTD.) 08 May 2020 (2020-05-08) entire document | 1-33 |
| A | CN 116320635 A (BEIJING IQIYI SCIENCE & TECHNOLOGY CO., LTD.) 23 June 2023 (2023-06-23) entire document | 1-33 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 November 2024** | **19 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/120992**

### C.    DOCUMENTS CONSIDERED TO BE RELEVANT

| Category* | Citation of document, with indication, where appropriate, of the relevant passages | Relevant to claim No. |
|---|---|---|
| A | CN 115408559 A (ALIBABA (CHINA) CO., LTD.) 29 November 2022 (2022-11-29)<br>entire document | 1-33 |
| A | US 2022215431 A1 (META PLATFORMS, INC.) 07 July 2022 (2022-07-07)<br>entire document | 1-33 |
| A | WO 2020007164 A1 (TENCENT TECHNOLOGY (SHENZHEN) CO., LTD.) 09 January 2020 (2020-01-09)<br>entire document | 1-33 |

Form PCT/ISA/210 (second sheet) (July 2022)

**INTERNATIONAL SEARCH REPORT**
Information on patent family members

International application No.

**PCT/CN2024/120992**

| Patent document cited in search report | | | Publication date (day/month/year) | Patent family member(s) | | | Publication date (day/month/year) |
|---|---|---|---|---|---|---|---|
| CN | 112035740 | A | 04 December 2020 | CN | 112035740 | B | 04 June 2024 |
| CN | 111125420 | A | 08 May 2020 | CN | 111125420 | B | 07 May 2021 |
| CN | 116320635 | A | 23 June 2023 | None | | | |
| CN | 115408559 | A | 29 November 2022 | None | | | |
| US | 2022215431 | A1 | 07 July 2022 | None | | | |
| WO | 2020007164 | A1 | 09 January 2020 | TW | 202007178 | A | 01 February 2020 |
| | | | | TWI | 702844 | B | 21 August 2020 |
| | | | | EP | 3819821 | A1 | 12 May 2021 |
| | | | | EP | 3819821 | A4 | 09 June 2021 |
| | | | | EP | 3819821 | B1 | 05 July 2023 |
| | | | | US | 2020374589 | A1 | 26 November 2020 |
| | | | | US | 11122333 | B2 | 14 September 2021 |
| | | | | CN | 108921221 | B | 18 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311294666